# EUROPEAN PATENT APPLICATION

(11) **EP 1 798 516 A1**
(43) Date of publication of application: **20.06.2007**
(21) Application number: 05112089.7
(22) Date of filing: 14.12.2005
(51) Int. Cl.: G01B 21/04

(54) **Method for generating a relation between an output signal of a distance gauge and a distance between the distance gauge and a measuring surface of a mechanical element**

(71) Applicant: Aktiebolaget SKF, S-415 50 Gothenburg (SE)
(72) Inventor: Göransson, Bo, S-415 06, Sweden (SE)

(57) **Abstract**

A method and computer program product for generating a relation between an output signal of a distance gauge (7) and a distance between the distance gauge (7) and a measuring surface (3) of a mechanical element (1) is disclosed. Applications include calibrating a distance gauge (7) and concurrent calibrating and distance measuring.

## Description

### FIELD OF INVENTION

According to a first aspect, the present invention is related to a method for generating a relation between an output signal of a distance gauge and a distance between the distance gauge and a measuring surface of a mechanical element.

According to a second aspect, the present invention is related to a method for calibrating a distance gauge incorporating the first aspect.

According to a third aspect, the present invention is related to a method for concurrent calibrating of a distance gauge and distance measuring incorporating the first aspect.

### BACKGROUND OF INVENTION

Today, there is a plurality of gauge types. Non-limiting examples include inductive gauges, capacitive gauges, eddy current gauges, ultrasonic gauges, and optical gauges.

It is commonly known that it may be difficult to know how a distance gauge, or distance probe, will behave in a specific technical environment due to factors in the environment affecting the probe. This results in that there is a need to consider manual calibration of the distance gauge after its mounting and when in use. Otherwise there is a risk that a gauge will provide measures with an intolerable error.

The need of calibrating is e.g. caused by changes in temperature, external magnetic field, contamination or oxidation of layers, humidity, ageing material, and speed in relation to the object to be measured.

It is expensive to calibrate for two reasons. First there is a cost for a person and equipment for performing the actual calibration, but there is also a cost for the downtime of the machine in need of calibration.

### SUMMARY OF INVENTION

According to the first aspect of the present invention a method for generating a relation between an output signal of a distance gauge and a distance between the distance gauge and a measuring surface of a mechanical element is disclosed. The distance data covers at least a part of the measuring surface. The distance data is generated by the distance gauge traversing the measuring surface, the measuring surface moving in relation to the distance gauge, or a combination thereof. Alternatively, it may cover the whole measuring surface.

A key feature of the invention includes that the measuring surface presents at least one surface characteristic of the mechanical element. A surface characteristic is related to a shape of a surface of the mechanical element. The method comprises the following.
- Synchronising the output signal, covering at least a part of the measuring surface,
- Generating, for the at least one characteristic, an output signal curve approximation disregarding the surface characteristic,
- Calculating, for each surface characteristic, a difference between the output signal curve approximation and the output signal, and
- Generating the relation based on the at least one difference and the at least one surface characteristic.

The at least one surface characteristic affects the distance gauge output signal, since the distance gauge picks up a change in distance caused by the change associated with the surface characteristic. The physical extent of the at least one surface characteristic has to be significant enough to lead to a response in distance gauge output signal.

In an embodiment, synchronising the output signal is done in relation to at least one surface characteristic.

Advantages of the present invention include that the generating of the relation is capable of dealing with changes in temperature, external magnetic field, layers, humidity, ageing material, and speed in relation to the object to be measured, since the generating of the relation is simple to obtain.

In an embodiment, the method is applied on real-time basis. This offers the advantage of a more or less continuous update of the relation between the output signal data of the distance gauge and the distance data.

In an embodiment, the method is applied only periodically or when considered necessary. This offers the advantage that a less powerful computer processor, or electronic hardware equivalents, responsible for the data processing may be used. Also, a single processor may be connected to a number of mechanical elements that have relations that present relations as described above.

The measuring surface may be devised on a rotating device or a translating mechanical element, or a combination thereof. Non-limiting examples include a slide, a shaft, and a spindle.

In an embodiment, the at least one surface characteristic comprises at least one known distance deviation, d, measurable along the measuring surface. Thus, in the line of measuring of the measuring surface there is a deviation that leads to an identifiable track in the distance data. Thus characteristics of the deviation lead to a change, or changes in the values of the output signal of the distance gauge. The characteristic may include one or more recesses being defined at least in terms of depth in relation to the measuring surface, or one or more protrusions defined in terms of height in relation to the measuring surface. The depth, or height, is designed in relation to the measuring situation.

In an embodiment, the mechanical element presents a synchronising function. The synchronising function is responsible for generating a trig pulse, or a triggering pulse. In an embodiment, this may be constituted by a synchronising mark.

In an embodiment, a surface characteristic may be employed to accomplish a synchronising function. The surface characteristic may lead to a reference for synchronisation. The synchronising mark facilitates a synchronising function in the way that it provides position information, since the output signal presents an explicit reference to a surface characteristic. This offers the advantage of a way of relating a surface characteristic and distance gauge output signal by that the synchronising mark will leave a recognizable track in the distance gauge output signal.

In an embodiment, the synchronising function is accomplished by a mark.

In an embodiment, the synchronising function is accomplished by an encoder.

In an embodiment, the synchronising function is accomplished by a separate distance gauge.

In an embodiment, relating the at least one surface characteristic and the output signal is achieved by investigating the output signal and the at least one surface characteristic and finding effect(s) in the output signal caused by the at least one surface characteristic.

In an embodiment, the generating a relation is constituted by generating a mathematical expression. Being able to provide a mathematical formula with constants that relates the two variables also offers the advantage of increased understanding of the complex relations between the two variables and especially the effect of the operational context of the distance gauge.

In a narrow interval, the mathematical expression may be a linear function approximation.

In an embodiment, the generating of a mathematical expression comprises generating constants of the mathematical expression.

In an embodiment, the method further comprises the following.
- Offering a plurality of mathematical expressions
- Receiving a user selection concerning a mathematical expression from the plurality of mathematical expressions

This offers the advantage that the method will be more flexible to deal with a number of transfer functions. This opens up for a wide usage among materials, distance gauges of various types, and in various applications.

In an embodiment, the method further comprises suggesting one or more mathematical expressions from a plurality of mathematical expressions to a user, or selecting a mathematical expression. This increases the flexibility of the present invention, since depending on type of gauge, e.g. ferrous or non-magnetic, a single or a group of expressions may be preferred.

In an embodiment, the method further comprises using a designated mathematical expression. This offers the advantage of a single mathematical expression being stored in the electronic circuitry that executes the method.

In an embodiment, the generating of the mathematical expression includes optimising. This applies in the case where the number of surface characteristics is higher than the number of constants in the mathematical expression. Optimising may be achieved e.g. by Least Mean Square (LMS) or any optimisation method known to the person skilled in the art.

In an embodiment, the method further comprises storing at least one of: the constants, the mathematical relation, and values of the distance gauge output signal and corresponding distances in a readable media. The readable media may be located in a close operative proximity of the distance gauge or located remotely and accessible using a computer network.

According to the second aspect of the present invention, a method for calibrating a distance gauge, based on the method according to the first aspect is disclosed. In addition to the advantages presented above, calibrating may be done without stopping the mechanical element. Also, calibrating according to this aspect of the present invention does not require an additional distance gauge.

According to the third aspect of the present invention, a method for concurrent calibrating and distance measuring according to the first aspect is disclosed. The method further comprises compensating the distance data for the at least one surface characteristic. An advantage is that distance measuring and calibration may be done concurrently.

Computer program products loadable into the internal memory of a computer, comprising software code portions for performing the steps of the three aspects, when run on a computer, are also disclosed.

The present invention is widely applicable. However, a few non-limiting examples of applications include machine tools spindles, and pumps.

Also, the methods above may be implemented as devices including processors, or corresponding electronic hardware, and potentially input/output means, and indicating means. Such devices may be located either in the vicinity of the distance gauge or remotely from the distance gauge.

### BRIEF DESCRIPTION OF DRAWINGS

In Figure 1, a schematic illustration of the method is given.

In Figure 2, an illustration of the measuring operation of the distance gauge in relation to the mechanical element comprising two surface characteristics is given.

In Figure 3, a schematic illustration of a measuring surface combined with a distance gauge output signal is given.

In Figure 4, another schematic illustration of a measuring surface combined with a distance gauge output signal is given.

In Figures 5A, 5B, 5C, and 5D, examples of surface characteristics are given.

In Figures 6A, 6B, 6C, and 6D, non-limiting applications of surface characteristics on different types of mechanical elements are given.

In Figure 7, an embodiment of an application of a distance incorporating the present invention is disclosed.

In Figure 8, an embodiment of an application of a distance incorporating the present invention is disclosed.

### DESCRIPTION OF PREFERRED EMBODIMENTS

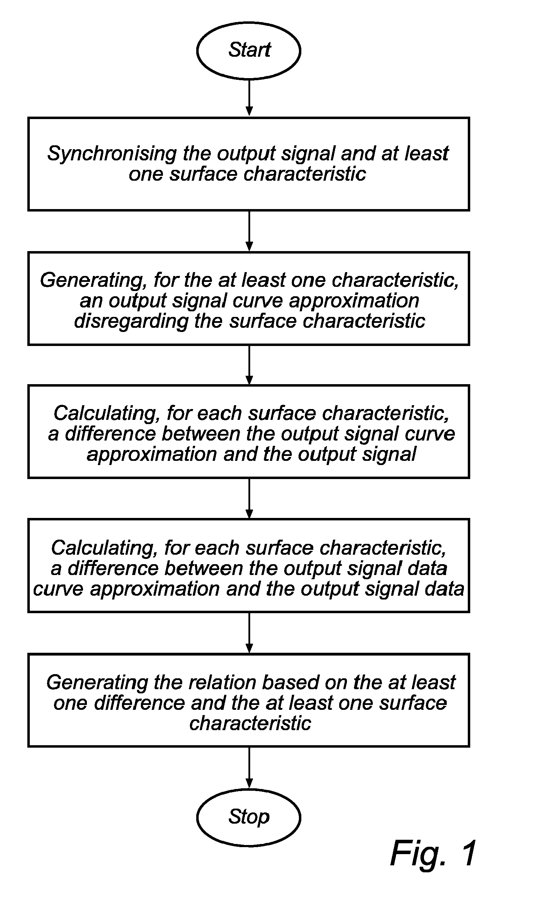

In Figure 1, steps of an embodiment of the method are given.

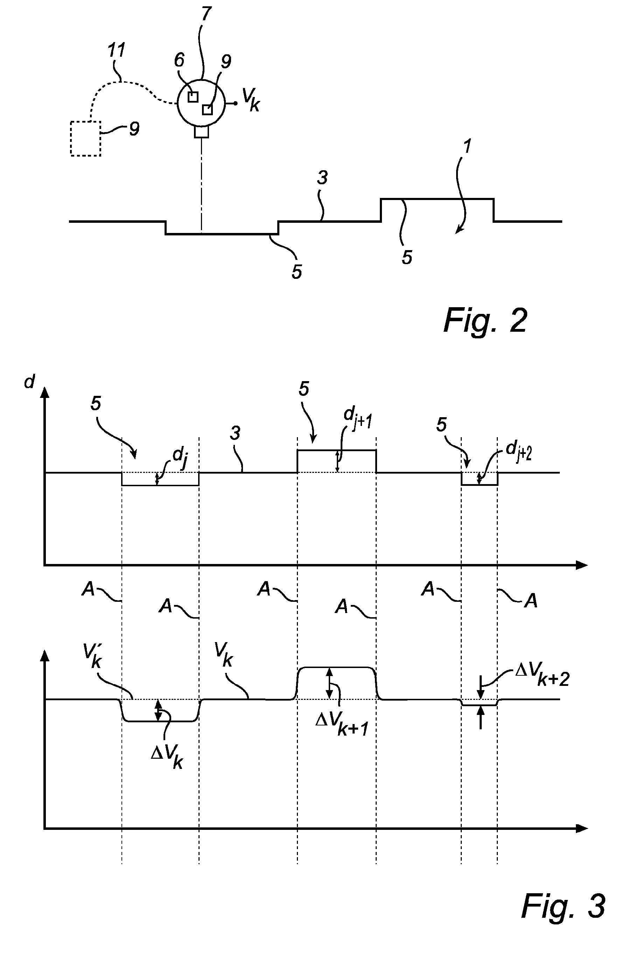

Referring to Figure 2, in the method for generating a relation between an output signal of a distance gauge 7, Vₖ, and a distance between the distance gauge 7 and a measuring surface 3 of a mechanical element 1. In this embodiment the mechanical element 1 is moving.

In an embodiment, the method is executed by a processor 6 located in the proximity of the distance gauge 7.

In Figure 2, it is shown how distance data, Vₖ, is gathered using a distance gauge 7 measuring a measuring surface 3 presenting surface characteristics 5, in this case two surface characteristics. The mechanical element 1 is traversed in relation to the distance gauge 7. Alternatively, the processor 6 reads the output signal, Vₖ, from a memory, in case the output signal has been stored as an intermediate step. Surface characteristic data concerning at least one surface characteristic 5 are also read.

The memory 9 is in the proximity of the processor 6. However, it may be accessible via a network 11, as indicated with the dashed lines in Figure 2.

The surface characteristic data concerning surface characteristics 5 comprises information related to depth, dⱼ, or height, dⱼ₊₁, their relative position and shape, dⱼ₊₂ on the measuring surface 3, i.e. the surface characteristic data defines the surface characteristics 5.

Then, the processor 6 synchronises, by identifying the effect(s) of the surface characteristics 5 in the output signal data, Vₖ. This is indicated in Figure 3, in the case of three surface characteristics 5. The dashed lines A connecting the surface characteristics 5 and the distance gauge output signal, Vₖ, is the result of the synchronisation, i.e. the relation between a deviation, caused by a surface characteristic 5, on the measuring surface 3 and a deviation in the distance gauge output signal, Vₖ, caused by the deviation on the measuring surface 3 is identified.

An alternative is to use a synchronising pulse when measuring the surface. Once this is done it is possible to investigate how a certain deviation on the measuring surface results in a change in distance gauge output signal.

Then, the processor 6 generates, for each surface characteristic 5, an output signal data curve approximation, V'ₖ, disregarding the surface characteristic data 5. Non-limiting examples of curve approximations include interpolation, polynomial fitting, spline, or other methods available to the person skilled in the art. Thus, the surface characteristics 5 are disregarded in order to be able to later estimate the caused change in distance gauge output signal, delta Vₖ, delta Vₖ₊₁, and delta Vₖ₊₂. In Figure 3, embodiments of depth, height and shapes of surface characteristics are shown and their effects on the distance gauge signal value. The difference in distance gauge signal value, which is the difference between interpolated signal value, i.e. the estimated signal value when disregarding the effect of the surface characteristic causing the difference, and the read distance gauge signal value is indicated in Figure 3.

Then, the processor calculates, for each surface characteristic, a difference between the output signal data curve approximation and the output signal data. The next step is that the processor generates the relation based on the at least one difference and the at least one surface characteristic.

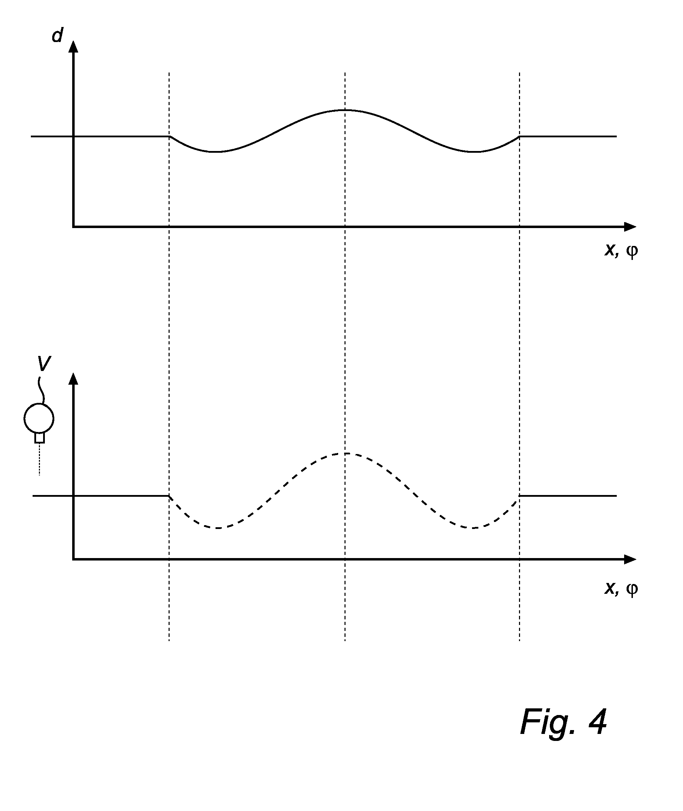

In Figure 4, an example of a surface characteristic 5 is given.

Non-limiting and enabling examples of mathematical expressions are given in the Table. Other expressions are conceivable for the person skilled in the art.

**Table**

| Expression, V is voltage input | Minimum number of surface characteristics |
|---|---|
| A+B(1-e^{CV}) | 3 |
| A + CV^{E} | 3 |
| A₀ + A₁V + A₂V² + ...+ AₙVⁿ | n+1 |

As can be seen in the Table, the present invention is applicable for both linear and non-linear distance gauges.

Initial values of parameters, such as A, B, A₀, and A₁, in the expressions in the Table may be set by a user.

The constants are obtained by solving one or more equations of one of mathematical expressions in which distance gauge signal values are related to surface characteristics data. In order to be usable when finding coefficients not two surface characteristics should present the same height, or depth. The number of equations depends on how many constants the mathematical expression comprises.

In fact, the constants in the table above may not be constants but depend with temperature, external magnetic field, layers, humidity, and ageing material. However, they are used as constants. In an embodiment formulas may be used instead of the constants given here.

In embodiments, the processor generates a mathematical relation on-line or offline, i.e. the relation may be generated with the distance gauge being connected to a device executing the method or it may be electrically separated from the distance gauge. Also, using the mathematical expression it is possible to use the formula to interpolate values and extrapolate values that may lie outside the present range of operation. Especially, asymptotic values of the expressions, corresponding to surface characteristics presenting a depth in the mechanical element, are important since their changes indicate drift. In an embodiment, in case the drift exceeds a limit the processor triggers an alarm.

The processor 6 may be arranged to narrow down the number of expressions to the ones that are preferred or possible by checking surface characteristics data. For instance, in case the mechanical element 1 only has three surface characteristics 5 then it is not possible to use formulae including more than three constants since the generating of the constants will not lead to unique solution. In case optimising is desired then a number surface characteristics 5 higher than the number of constants in the mathematical expression may be used. The selection of formula may be based on a user preference.

In an embodiment, at least one the constants, the mathematical relation, and a set of values of the distance gauge output signal and corresponding distances are stored in a readable media. The set of values and the corresponding distances may be used a look up table.

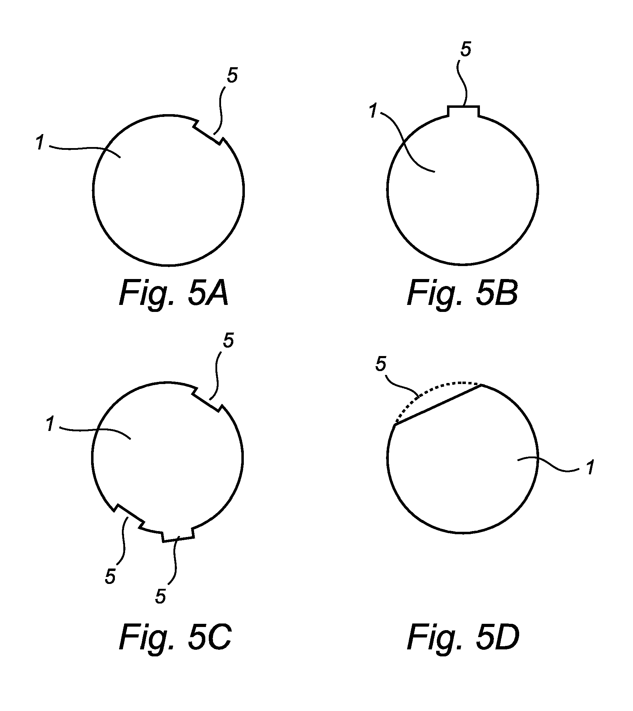

In Figures 5A, 5B, 5C, and 5D, a number of embodiments illustrating various non-limiting designs of surface characteristics 5, in the case of them being arranged to a circumference of a round mechanical object. In Figure 5A, a recess in the surface has been arranged. In Figure 5B, a protrusion is illustrated. In Figure 5C, a combination of surface characteristics 5 is given. In Figure 5D, the surface characteristic 5 presents a shape defined by a straight line joining the ends of an arc.

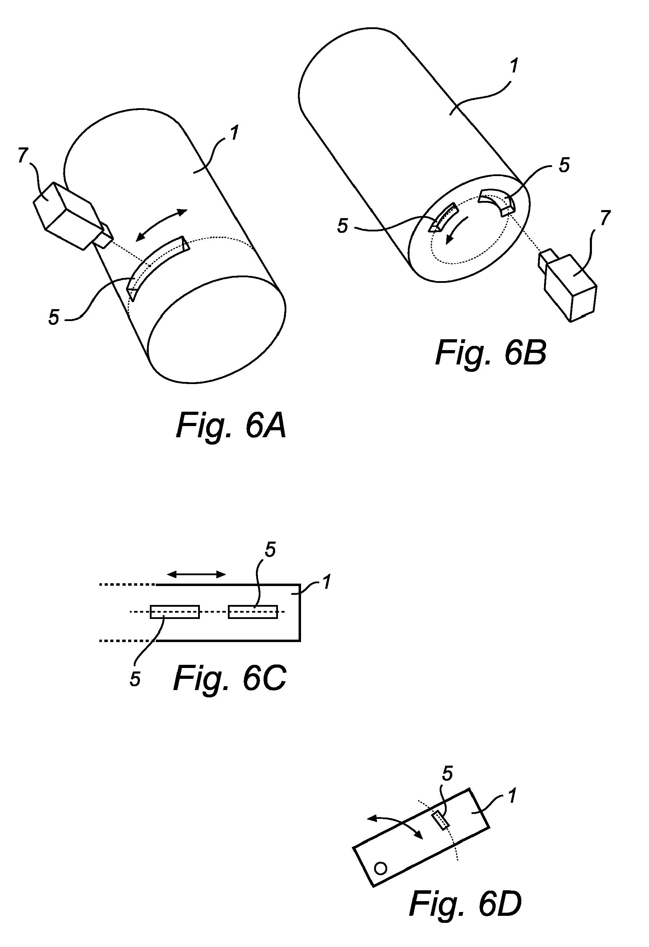

In Figures 6A, 6B, 6C, and 6D, non-limiting applications of surface characteristics 5 on different types of mechanical elements are given. Arrows introduce non-limiting moving aspects of the features disclosed in the Figures 6A to 6D. In Figure 6A, a surface characteristic 5 is arranged on the mantel side of round mechanical object 1. Also a distance gauge 7 is presented. In Figure 6B, a surface characteristic 5 is arranged on an end side of a mechanical object 1. Also a distance gauge 6 is presented. In Figure 6C, the mechanical element 1 is moved in at least one direction, but potentially also in an opposite direction. In Figure 6D, an arm rotary movable, e.g. as indicated by the arrow, is presented. On the arm a surface characteristic 5 is arranged.

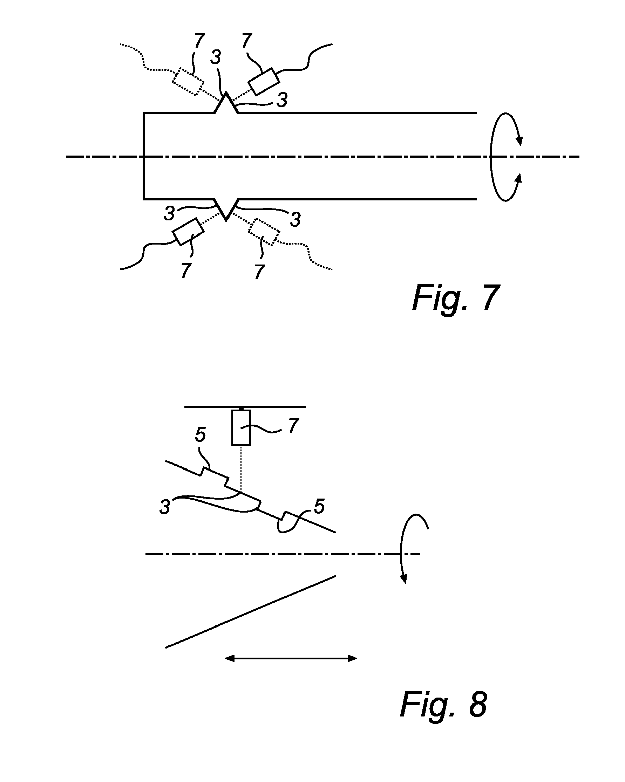

In Figure 7, an embodiment of an application of a distance incorporating the present invention is disclosed. In this embodiment the method for generating a relation is applied on a slanting surface 3. In Figure 7, a distance gauge 7 is arranged for measuring on a slanting surface. Also, in Figure 7, a set up of supplementary distance gauges 7 is indicated by dashed lines.

In Figure 8, an embodiment of an application of a distance incorporating the present invention is disclosed. In this embodiment, the method for generating a relation is applied in relation to a surface that may present a conical feature. In Figure 8, at least one of the distance gauge 7 and the surface 3, in this case a surface of a mechanical element 1 moves back and forth, as indicated by the arrow.

## Claims

1. Method for generating a relation between an output signal of a distance gauge (7) and a distance between the distance gauge (7) and a measuring surface (3) of a mechanical element (1), **characterized by**
- synchronising the output signal, covering at least a part of the measuring surface (3),
- generating, for the at least one characteristic (5), an output signal curve approximation disregarding the surface characteristic,
- calculating, for each surface characteristic (5), a difference between the output signal curve approximation and the output signal, and
- generating the relation based on the at least one difference and the at least one surface characteristic.

2. Method according to claim 1, wherein the at least one surface characteristic (5) comprises at least one distance deviation, d, measurable along the measuring surface (3).

3. Method according to claim 1, wherein the mechanical element (1) presents a synchronising function.

4. Method according to claim 1 wherein synchronising the output signal is done in relation to at least one surface characteristic (5).

5. Method according to claim 1, wherein the generating a relation is constituted by generating a mathematical expression.

6. Method according to claim 5, wherein the generating a mathematical expression comprises generating constants of the mathematical expression.

7. Method according to claim 5, further comprising:
- offering a plurality of mathematical expressions, and
- receiving a user selection concerning a mathematical expression from the plurality of mathematical expressions.

8. Method according to claim 5, further comprising:
- suggesting one or more mathematical expressions from a plurality of mathematical expressions to a user, or
- selecting a mathematical expression.

9. Method according to claim 5, further comprising:
- using a designated mathematical expression.

10. Method according to claim 1, wherein the generating the mathematical expression includes optimising.

11. Method according to claim 6, further comprising storing at least one of: the constants, the mathematical relation, and values of the distance gauge output signal and corresponding distances in a readable media.

12. A computer program product loadable into the internal memory of a computer, comprising software code portions for performing the steps of any one of claim 1 to 11, when run on a computer.

13. Method for calibrating a distance gauge, according to any one of claims 1 to 11.

14. A computer program product loadable into the internal memory of a computer, comprising software code portions for performing the steps of claim 13, when run on a computer.

15. Method for concurrent calibrating and distance measuring, according to any one of claim 1 to 11, further comprising compensating the measured distance for the at least one surface characteristic.

16. A computer program product loadable into the internal memory of a computer, comprising software code portions for performing the steps claim 15, when run on a computer.
